# EUROPEAN PATENT APPLICATION

(11) **EP 1 578 093 A1**
(43) Date of publication of application: **21.09.2005**
(21) Application number: 04445032.8
(22) Date of filing: 16.03.2004
(51) Int. Cl.: H04M 1/725, H04L 12/56, H04L 29/06

(54) **Method of pairing a device with an accessory and device therefor**

(71) Applicant: Sony Ericsson Mobile Communications AB, 221 88 Lund (SE)
(72) Inventor: Ekdahl, Thomas Jönsson, 24724 Södra Sandby (SE)
(74) Representative: Akerman, Marten Lennart

(57) **Abstract**

The invention relates to a method of pairing a device (10) with an accessory (20), e.g. a mobile phone with a headset. The invention also relates to a device for performing the method. The method comprises the steps of: letting the device read a graphic representation (22) of information associated with the accessory; converting the graphic representation to information; extracting data from the information representing data required for the pairing; setting the device to an adding accessory mode; setting the accessory to a pairing mode; and performing the pairing using the extracted data. Data required for the pairing is transferred to the device by optical recognition of a graphic representation associated with the accessory. Then the pairing is performed automatically.

## Description

### Field of the invention

The present invention relates to a method of pairing a device and an accessory, e.g. a mobile phone with a headset. Data required for the pairing is transferred to the device by optical recognition of a graphic representation associated with the accessory. Then the pairing is performed automatically. The invention also relates to a device for performing the method.

### State of the art

Today handheld devices such as mobile telephones can often be used with accessories with a wireless communication between the device and the accessory, e.g. by means of a Bluetooth® connection. Before the device and the accessory can be used together, they must be logically connected. This is carried out by "pairing" the device and the accessory. In the past, the user was required to manually enter a passkey on the device, such that the device can identify which one of the accessories in the vicinity of the device is to be connected. The user had to memorise the passkey or keep the manual of the accessory handy. The procedure also was experienced as difficult and prohibited some users to pair the device and the accessory themselves.

### Summary of the invention

The object of the invention is to simplify the procedure of pairing a device and an accessory. The invention employs optical reading of a graphic representation carrying the required data for performing the pairing. Particularly a mobile phone with a built-in camera can be used to extract the required data from information coded in a barcode arranged on the accessory or a label associated with the accessory.

In a first aspect the invention provides a method of pairing a device and an accessory, comprising the steps of:
letting the device read a graphic representation of information associated with the accessory;
converting the graphic representation to information;
extracting data from the information representing data required for the pairing; setting the device to an adding accessory mode;
setting the accessory to a pairing mode; and
performing the pairing using the extracted data.

In another embodiment, the method comprises the steps in another order:
setting the accessory to a pairing mode;
setting the device to an adding accessory mode;
letting the device read a graphic representation of information associated with the accessory;
converting the graphic representation to information;
extracting data from the information representing data required for the pairing; and
performing the pairing using the extracted data.

Preferably, the extracted data comprises the passkey of the accessory.

Preferably, the device reads the graphic representation by means of a camera.

Suitably, the graphic representation is a barcode.

The barcode may be arranged on the accessory or on a label associated with the accessory.

In one embodiment, the barcode is printed on the accessory.

In another embodiment, the barcode is formed in the material of the accessory.

Preferably, the pairing is performed via radio signals.

The device may be a portable telephone, a pager, a communicator, a smart phone or an electronic organiser.

The accessory may be a headset or a hands free kit.

In a second aspect the invention provides a device comprising means for wireless communication with an accessory.

According to the invention, the device comprises or is connectable to an optical reader for reading a graphic representation of information associated with the accessory;
a code recognition means for converting the graphic representation to information and extracting data from the information required for pairing the device and the accessory; and
a pairing means for performing the pairing using the extracted data.

Preferably, the extracted data comprises the passkey of the accessory.

Preferably, the optical reader comprises a camera.

Suitably, the code recognition means is adapted to recognize a barcode.

Preferably, the pairing means is connected to a radio part.

The device may be a portable telephone, a pager, a communicator, a smart phone or an electronic organiser.

### Brief description of the drawings

The invention will be described in detail below with reference to the accompanying drawings, in which:
Fig. 1 is a schematic drawing of a device and an accessory according to the invention, and
Fig. 2 is a diagram of the co-operating units in the device and the accessory in fig. 1.

### Detailed description of preferred embodiments

The invention will be described with reference to a mobile telephone and an accessory, such as a headset or a hands free kit. The invention is equally applicable to other handheld devices such as pagers, communicators, smart phones and electronic organisers. The accessory can be any wireless accessory. The device should be provided with a camera, either built-in or attachable, and means for communicating with the accessory by radio, such as a Bluetooth connection.

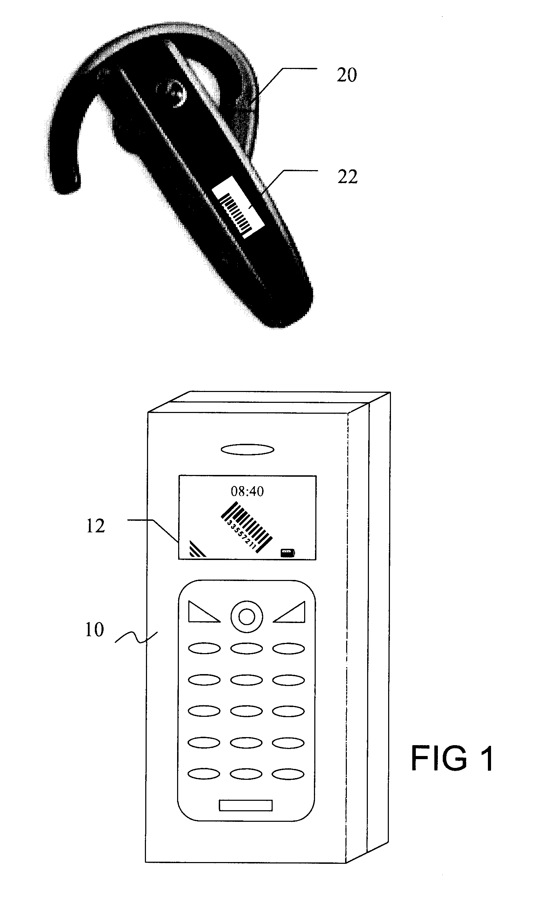

Fig. 1 shows an example of a mobile phone 10 with a display 12, which is also used as viewfinder for the camera. The lens of the camera is located on the rear side and not visible in the drawing. An accessory 20 is illustrated by a headset for hanging on the ear of a user.

Of course, the mobile phone is provided with the usual keypad, microphone and speaker etc., which are all of conventional nature and need not be discussed here.

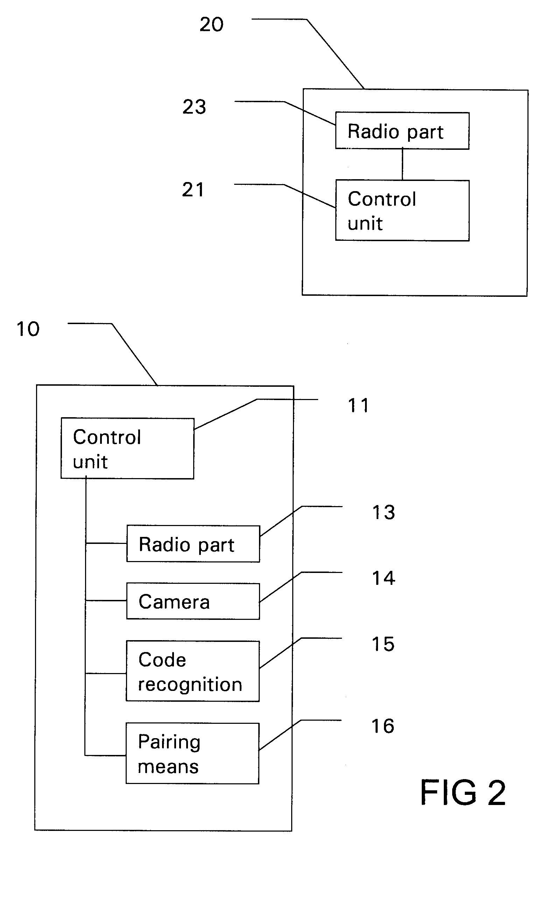

The parts relevant to the present invention are shown in fig. 2. The mobile phone 10 has a control unit 11 controlling the operation of the device, a radio part 13 for communicating with the accessory, a camera 14, a code recognition means 15 and a pairing means 16. The pairing means 16 performs the pairing by setting up communication parameters e.g. in accordance with the Bluetooth standard. The accessory 20 also comprises a control unit 21 and a radio part 23 for communicating with the device 10.

In the prior art, the procedure when pairing an accessory with a phone basically includes the following steps:
1. The accessory is set to "pairing mode", i.e. the accessory is switched on to be discoverable by the phone and is ready to be paired.
2. The phone is set to "add a Bluetooth accessory".
3. The phone is set to "Bluetooth pairing mode". Then, the phone lists all units in the neighbourhood that are enabled for pairing. This could of course be more than the new accessory depending on where the user is at the moment.
4. The desired accessory is chosen from the list of Bluetooth devices within range.
5. A specific "passkey" for the Bluetooth connection of the accessory is entered in the phone. This passkey is provided in the documentation of the accessory. It usually consists of a number entered by the user by means of the keypad on the device.
6. The pairing process is started.

As may be seen from the above procedure, quite a number of steps must be conducted in order to pair the Bluetooth accessory. The technology level is quite high for an average user, resulting in a high usage threshold. The passkey of the accessory must be known or the documentation within reach. Also the pairing process can be experienced as a bit abstract.

In the invention instead an optical code recognition is used to collect the data required for the pairing. This results in that the pairing is automatic except for the user starting the procedure and using a camera to scan a graphic representation.

The invention requires that the device has a built-in camera 14 or a camera is attached to the device. The camera should have the capability (e.g. macrolens) to be able to scan the code.

A graphical representation carrying information including the data required for the pairing has to be provided with the accessory. In fig. 1 a barcode label 22 is attached to the accessory 20. Other types of graphical representations are possible. In case of Bluetooth pairing, the code carries at least the passkey required by the device and suitably also the name of the accessory. In other wireless accessory systems, a passkey may not be required.

The device 10 comprises an image processing application 15 for code recognition in order to interpret the information carried by the graphical code.

In a preferred embodiment of the present invention the pairing procedure will be as follows:
1. The user starts the camera 14 and code recognition means 15, and directs the camera 14 towards the barcode 22 on the accessory 20. The barcode now appears in the display 12 and the code reading is performed. The code recognition means 15 then performs the required image processing for extracting the information from the code. The following information is now known by the device:
   - The name of the accessory (now it does not have to be chosen from a list).
   - The passkey of the accessory (the user does not have to enter the passkey himself).
2. The device 10 recognizes the accessory 20 as a Bluetooth device and asks the user if he would like to pair the accessory 20 with the device 10.
3. The user accepts pairing with the accessory which automatically sets the device 10 to "add Bluetooth accessory".
4. The device 10 requests the user to set the accessory in pairing mode, i.e. the accessory is switched on to be discoverable by the device 10 and is ready to be paired, and the pairing process is started and finished automatically by the pairing means 16.

In an alternative embodiment the pairing procedure will be as follows:
1. The accessory 20 is set to "pairing mode" ", i.e. the accessory is switched on to be discoverable by the device 10 and is ready to be paired.
2. The device 10 is set to "add Bluetooth accessory". Then the camera 14 and code recognition means 15 are started.
3. The user directs the camera 14 towards the barcode 22 on the accessory 20. The barcode now appears in the display 12 and the code reading is performed. The code recognition means 15 then performs the required image processing for extracting the information from the code. The required information is now known by the device.
4. The pairing process is started and finished automatically by the pairing means 16.

In the first embodiment the user first performs the scanning with the camera, and the device set is to "add Bluetooth accessory" automatically. In the second embodiment the user first sets the device to "add Bluetooth accessory" and then performs the scanning. Other orders of the various steps are also possible within the scope of the invention. In both the embodiments above, the number of the steps has been reduced from six to four.

The barcode is suitably printed on a label and attached to the accessory. It may also be arranged directly on the accessory, e.g. printed on the surface or formed in the material. A plastic cover may for instance be moulded to provide a relief carrying a code which may be scanned. As a complement, the barcode could also be printed in the manual. Suitably, also a number of self-adhesive labels are provided. In some situations it is perhaps more convenient to read the barcode with the camera from the manual than from the accessory. For instance in a car hands free kit the label may be placed next to the volume control, but could be more easy to read from the manual.

The present invention has several advantages over the prior art. Only graphical information is needed in the Bluetooth accessory. The handling of the pairing is intuitive and straightforward for the user. The user need not know the passkey. Less level of technology skills is needed. Generally the procedure is more user friendly.

A person skilled in the art will realise that it is possible to implement the invention by means of various combinations of hardware and software without departing from the scope of the invention. The invention is only limited by the claims below.

## Claims

1. A method of pairing a device (10) and an accessory (20), **characterised by** the steps of:
letting the device (10) read a graphic representation (22) of information associated with the accessory (20);
converting the graphic representation (22) to information;
extracting data from the information representing data required for the pairing; setting the device (10) to an adding accessory mode;
setting the accessory (20) to a pairing mode; and
performing the pairing using the extracted data.

2. A method of pairing a device (10) and an accessory (20), **characterised by** the steps of:
setting the accessory (20) to a pairing mode;
setting the device (10) to an adding accessory mode;
letting the device (10) read a graphic representation (22) of information associated with the accessory (20);
converting the graphic representation (22) to information;
extracting data from the information representing data required for the pairing; and
performing the pairing using the extracted data.

3. A method according to claim 1 or 2, **characterised in that** the extracted data comprises the passkey of the accessory (20).

4. A method according to claim 1, 2 or 3, **characterised in that** the device (10) reads the graphic representation by means of a camera (14).

5. A method according to claim 1, 2, 3 or 4, **characterised in that** the graphic representation is a barcode (22).

6. A method according to claim 5, **characterised in that** the barcode (22) is arranged on the accessory (20).

7. A method according to claim 6, **characterised in that** the barcode is printed on the accessory.

8. A method according to claim 6, **characterised in that** the barcode is formed in the material of the accessory.

9. A method according to claim 5, **characterised in that** the barcode is printed on a label associated with the accessory.

10. A method according to any one of the previous claims, **characterised in that** the pairing is performed via radio signals.

11. A method according to any one of the previous claims, **characterised in that** the device (10) is a portable telephone, a pager, a communicator, a smart phone or an electronic organiser.

12. A method according to claim 11, **characterised in that** the accessory (20) is a headset or a hands free kit.

13. A device (10) comprising means for wireless communication with an accessory (20), **characterised in that** it comprises or is connectable to an optical reader (14) for reading a graphic representation (22) of information associated with the accessory (20), and further comprises;
a code recognition means (15) for converting the graphic representation (22) to information and extracting data from the information required for pairing the device (10) and the accessory (20); and
a pairing means (16) for performing the pairing using the extracted data.

14. A device according to claim 13, **characterised in that** the extracted data comprises the passkey of the accessory (20).

15. A device according to claim 13 or 14, **characterised in that** the optical reader comprises a camera (14).

16. A device according to claim 13, 14 or 15, **characterised in that** the code recognition means (15) is adapted to recognize a barcode (22).

17. A device according any one of claims 13 to 16, **characterised in that** the pairing means (15) is connected to a radio part (16).

18. A device according to any one of claims 13 to 17, **characterised in that** the device (10) is a portable telephone, a pager, a communicator, a smart phone or an electronic organiser.
